# EUROPEAN PATENT APPLICATION

(11) **EP 4 261 694 A1**
(43) Date of publication of application: **18.10.2023**
(21) Application number: 21921822.9
(22) Date of filing: 28.01.2021
(51) Int. Cl.: G06F 12/06

(54) **MEMORY ACCESS METHOD AND DEVICE**

(71) Applicant: Huawei Technologies Co., Ltd., Shenzhen, Guangdong 518129 (CN)
(72) Inventor: FAN, Tuanbao, Shenzhen, Guangdong 518129 (CN); YU, Dongbin, Shenzhen, Guangdong 518129 (CN); CUI, Yong, Shenzhen, Guangdong 518129 (CN); KONG, Fei, Shenzhen, Guangdong 518129 (CN); SHI, Xiaoshan, Shenzhen, Guangdong 518129 (CN)
(74) Representative: MERH-IP Matias Erny Reichl Hoffmann Patentanwälte PartG mbB
(86) International application number: PCT/CN2021/074251
(87) International publication number: WO 2022/160214

(57) **Abstract**

This application discloses a method and an apparatus for accessing a memory, and relates to the field of memory access technologies, to reduce power consumption of a multi-channel memory chip and improve energy efficiency of the multi-channel memory chip. The apparatus includes: a controller, configured to: determine, based on an access address of a first access command, that the first access command accesses a first storage area or a second storage area in a memory chip, where the first storage area does not overlap the second storage area, the memory chip includes a plurality of memory dies, the first storage area occupies a first quantity of memory dies in the memory chip, the second storage area occupies a second quantity of memory dies in the memory chip, and the first quantity is less than the second quantity; and a channel interleaver, configured to: when the controller determines that the first access command accesses the first storage area, switch on the first quantity of memory dies; and when the controller determines that the first access command accesses the second storage area, switch on the second quantity of memory dies. Embodiments of this application are used to access the memory chip.

## Description

### TECHNICAL FIELD

This application relates to the field of memory access technologies, and in particular, to a method and an apparatus for accessing a memory.

### BACKGROUND

On a chip platform of a terminal or an industrial embedded application platform, to improve a bandwidth of a memory chip, a multi-channel (Channel) memory chip is usually used, and the memory chip is accessed in parallel through a plurality of channels, to improve an access bandwidth of the memory chip. For example, on a mobile phone platform, a four-channel low power double data rate (low Power Double Data Rate, LPDDR) memory chip is usually used, and a frequency is increased to a maximum frequency, to meet a requirement of a mobile phone for a high bandwidth of the memory chip in heavy load scenarios such as gaming, video recording, and benchmarking.

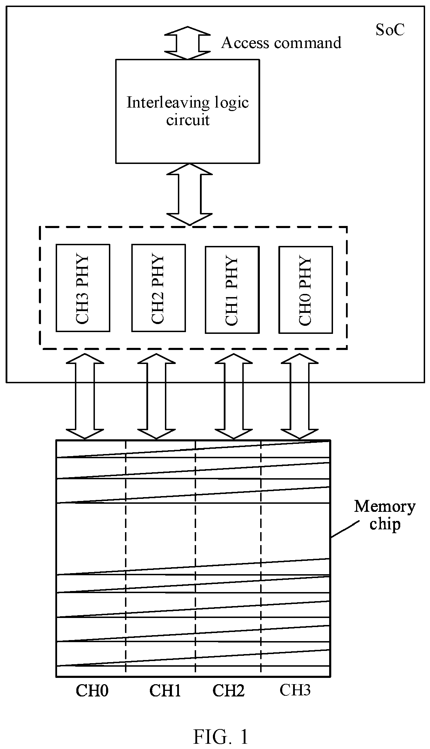

In a conventional manner, a four-channel memory chip is usually accessed in a single interleaving mode, that is, a storage area of the memory chip is considered as a partition, and is accessed in the same interleaving mode. For a principle of the interleaving mode, refer to FIG. 1. The memory chip includes four channels: a channel 0 (Channel 0, CH0), a channel 1 (CH1), a channel 2 (CH2), and a channel 3 (CH3), and an address range (using 16 GBytes as an example) of the partition including the four channels is 0x0 0000 0000 to 0x3 ffff ffff. A single interleaving logic circuit in a system on chip (System on Chip, SoC) that communicates with the memory chip may be configured to decode two address signals carried in an access command sent by a processor core in the SoC, to generate four chip select signals. The four chip select signals may gate at least one channel through a port physical layer (Port Physical Layer, PHY) for access.

Currently, a two-channel LPDDR5 may provide a peak bandwidth of up to 22 GB/s, and a four-channel LPDDR5 may provide a peak bandwidth of 44 GB/s. The bandwidth provided by the two-channel LPDDR5 is sufficient for the requirement for the bandwidth of the memory chip (generally less than 10 GB/s) in most scenarios. Only in a few scenarios such as heavy-load gaming, the four-channel LPDDR5 is necessary for the bandwidth of the memory chip. In other words, when accessing the memory chip in the conventional single interleaving mode, to meet a requirement in a few scenarios, memory space of the entire memory chip adopts four-channel interleaving access. However, as shown in a large amount of test data, under a same bandwidth, power consumption of a four-channel memory chip is greater than power consumption of a two-channel memory chip. The power consumption of the four-channel memory chip is high, and energy efficiency of the four-channel memory chip is naturally low.

### SUMMARY

Embodiments of this application provide a method and an apparatus for accessing a memory, to reduce power consumption of a multi-channel memory chip and improve energy efficiency of the multi-channel memory chip. To achieve the foregoing objectives, the following technical solutions are used in embodiments of this application.

According to a first aspect, a memory access apparatus is provided, where the memory access apparatus includes: a controller, configured to: determine, based on an access address of a first access command, that the first access command accesses a first storage area or a second storage area in a memory chip, where the first storage area does not overlap the second storage area, the memory chip includes a plurality of memory dies, the first storage area occupies a first quantity of memory dies in the memory chip, the second storage area occupies a second quantity of memory dies in the memory chip, and the first quantity is less than the second quantity; and a channel interleaver, configured to: when the controller determines that the first access command accesses the first storage area, switch on the first quantity of memory dies; and when the controller determines that the first access command accesses the second storage area, switch on the second quantity of memory dies. Optionally, the memory die (die) may be understood as a channel of the memory chip.

When a quantity of memory dies of the memory chip occupied by the first storage area is less than a quantity of memory dies of the memory chip occupied by the second storage area, the access command to access the first storage area can access only a part of memory dies of the memory chip. In other words, the channel interleaver may perform channel interleaving on a part of memory dies. When only some channels of the memory chip are switch-on, that is, some channels are activated for access, a bandwidth for accessing the first storage area is low, power consumption of the memory chip is low, and energy efficiency is high.

In a possible design, a second bandwidth required for accessing second data in the second storage area is higher than a first bandwidth required for accessing first data in the first storage area. When the bandwidth required for accessing the first data in the first storage area is low, the first storage area may not need to occupy all memory dies of the memory chip. When the first storage area occupies some channels of the memory chip, if channel interleaving is performed only on some channels, the power consumption of the memory chip is low, and the energy efficiency is high. In a possible design, the channel interleaver is specifically configured to: when the controller determines that the first access command accesses the first storage area, control a gating signal of the first quantity of memory dies to be switch-on; and the channel interleaver is further configured to output the gating signal based on a bit for indicating a memory die in a plurality of bits included in the first access command, where the gating signal is for gating one memory die in the first quantity of memory dies. In this way, through accessing different storage areas and switching on different gating signals, when the gating signal of the first quantity of memory dies is switch-on, it is equivalent to that the channel interleaver performs channel interleaving on a small part of channels, that is, a small part of channels in the memory chip can be accessed, to reduce the power consumption of the memory chip and improve the energy efficiency of the memory chip.

In a possible design, the channel interleaver is specifically configured to: when the controller determines that the first access command accesses the second storage area, control a gating signal of the second quantity of memory dies to be switch-on; and the channel interleaver is further configured to output the gating signal based on a bit for indicating a memory die in the plurality of bits included in the first access command, where the gating signal is for gating one memory die in the second quantity of memory dies.

In this way, through accessing different storage areas and switching on different gating signals, when the gating signal of the second quantity of memory dies is switch-on, it is equivalent to that the channel interleaver performs channel interleaving on a large part of channels, that is, a large part of channels in the memory chip can be accessed, to improve a bandwidth for accessing the memory chip and increase an access rate.

In a possible design, memory capacities of all memory dies in the second quantity of memory dies are the same. In this case, the memory chip may be understood as a chip with a regular shape.

In a possible design, the second quantity of memory dies include the first quantity of memory dies. That is, a part of memory dies in the second quantity of memory dies are the first quantity of memory dies.

In a possible design, the second quantity of memory dies further include a third quantity of memory dies other than the first quantity of memory dies, and a memory capacity of each memory die in the first quantity of memory dies is greater than a memory capacity of each memory die in the third quantity of memory dies.

When the memory capacity of each memory die in the first quantity of memory dies is greater than the memory capacity of each memory die in the third quantity of memory dies, the memory chip may be understood as a special memory chip with an irregular shape, that is, a capacity of a part of memory dies is large, and a capacity of a part of memory dies is small.

In a possible design, controlling the gating signal of the first quantity of memory dies to be switch-on may be understood as switching on switches connected to the first quantity of memory dies; and controlling the gating signal of the second quantity of memory dies to be switch-on may be understood as switching on switches connected to the second quantity of memory dies.

According to a second aspect, a method for accessing a memory is provided. The method includes: A memory access apparatus determines, based on an access address of a first access command, that the first access command accesses a first storage area or a second storage area in a memory chip, where the first storage area does not overlap the second storage area; the memory chip includes a plurality of memory dies, the first storage area occupies a first quantity of memory dies in the memory chip, the second storage area occupies a second quantity of memory dies in the memory chip, and the first quantity is less than the second quantity; when determining that the first access command accesses the first storage area, the memory access apparatus switches on a first quantity of memory dies; and when determining that the first access command accesses the second storage area, switches on a second quantity of memory dies. For beneficial effects of the second aspect, refer to descriptions of the first aspect.

In a possible design, the method further includes: A second bandwidth required for accessing second data in the second storage area is higher than a first bandwidth required for accessing first data in the first storage area.

In a possible design, the switching on the first quantity of memory dies includes: controlling a gating signal of the first quantity of memory dies to be switch-on; and the method further includes: outputting the gating signal based on a bit for indicating a memory die in a plurality of bits included in the first access command, where the gating signal is for gating one memory die in the first quantity of memory dies.

In a possible design, the switching on a second quantity of memory dies includes: controlling a gating signal of the second quantity of memory dies to be switch-on; and the method further includes: outputting the gating signal based on a bit for indicating a memory die in the plurality of bits included in the first access command, where the gating signal is for gating one memory die in the second quantity of memory dies.

In a possible design, memory capacities of all memory dies in the second quantity of memory dies are the same.

In a possible design, the second quantity of memory dies include the first quantity of memory dies.

In a possible design, the second quantity of memory dies further include a third quantity of memory dies other than the first quantity of memory dies, and a memory capacity of each memory die in the first quantity of memory dies is greater than a memory capacity of each memory die in the third quantity of memory dies.

According to a third aspect, a communication chip is provided. The communication chip includes the memory access apparatus according to any one of the first aspect or the possible designs of the first aspect.

According to a fourth aspect, an electronic device is provided. The electronic device includes the memory access apparatus according to any one of the first aspect or the possible designs of the first aspect.

According to a fifth aspect, a computer-readable storage medium is provided. The computer-readable storage medium includes computer instructions. When the computer instructions are run on an electronic device, the electronic device is enabled to perform the method according to any one of the first aspect or the possible designs of the first aspect.

According to a sixth aspect, a computer program product is provided. When the computer program product is run on a computer, an electronic device is enabled to perform the method according to any one of the first aspect or the possible designs of the first aspect.

### BRIEF DESCRIPTION OF DRAWINGS

FIG. 1 is a schematic diagram of accessing a memory chip in a same interleaving mode according to an embodiment of this application;
FIG. 2 is a schematic diagram of a structure of a memory chip according to an embodiment of this application;
FIG. 3 is a schematic diagram of accessing a memory chip in a same interleaving mode according to an embodiment of this application;
FIG. 4(a) and FIG. 4(b) are a schematic diagram showing that power consumption of a four-channel LPDDR5 is greater than power consumption of a two-channel LPDDR5 according to an embodiment of this application;
FIG. 5 is a schematic diagram of area division of a memory chip according to an embodiment of this application;
FIG. 6 is a schematic flowchart of applying for a memory according to an embodiment of this application;
FIG. 7 is a schematic flowchart of a method for accessing a memory according to an embodiment of this application;
FIG. 8 is a schematic diagram of a structural framework of a memory access apparatus according to an embodiment of this application;
FIG. 9 is a schematic diagram of area division of a memory chip according to an embodiment of this application;
FIG. 10 is a schematic diagram of a structure of a memory access apparatus according to an embodiment of this application;
FIG. 11 is a schematic diagram of a structure of a memory access apparatus according to an embodiment of this application;
FIG. 12 is a schematic diagram of a structure of a memory access apparatus according to an embodiment of this application;
FIG. 13 is a schematic diagram of a structure of a memory access apparatus according to an embodiment of this application;
FIG. 14 is a schematic diagram of a structure of a memory access apparatus according to an embodiment of this application;
FIG. 15 is a schematic diagram of a structure of a memory access apparatus according to an embodiment of this application;
FIG. 16 is a schematic diagram of a structure of a memory access apparatus according to an embodiment of this application;
FIG. 17(a) and FIG. 17(b) are a schematic diagram of power consumption of four-channel interleaving and power consumption of two-channel interleaving of a memory chip according to an embodiment of this application; and
FIG. 18 is a schematic diagram of a structure of an electronic device according to an embodiment of this application.

### DESCRIPTION OF EMBODIMENTS

For ease of understanding, some concepts related to embodiments of this application are described for reference by using examples. Details are shown as follows:

Memory chip: A memory chip may be understood as a DDR particle, and the DDR particle may be, for example, an LPDDR4 or an LPDDR5.

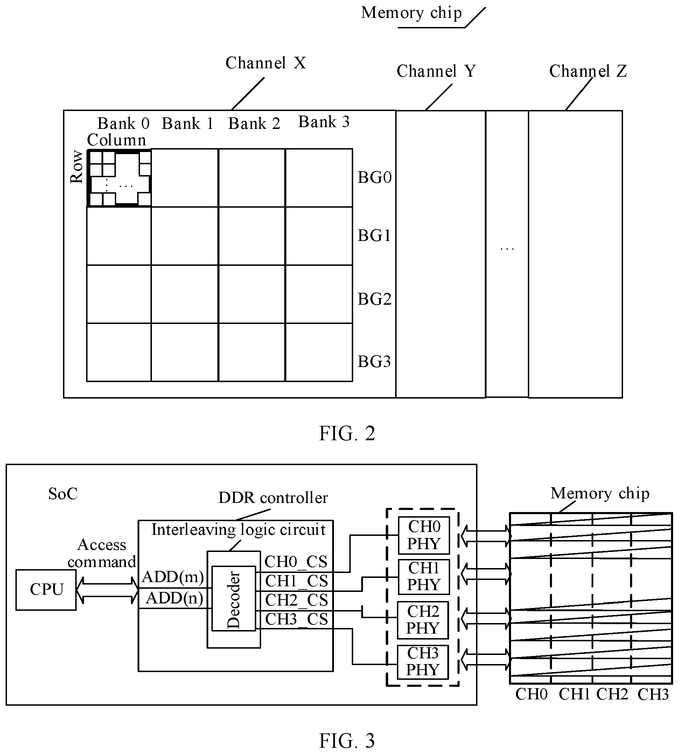

Channel (Channel): As shown in FIG. 2, one memory chip may include a plurality of channels (for example, a channel X, a channel Y, and a channel Z in FIG. 2), and each channel may be understood as a die. One die may include a plurality of memory bank groups (bank groups, BGs), each BG may include a plurality of banks (banks), and each bank may include a plurality of rows and a plurality of columns.

Channel interleaving (interleaving): For a multi-channel memory chip, an SoC may simultaneously access a plurality of channels. For example, when an access command for accessing the memory chip by the SoC is a read command, data may be simultaneously read from a plurality of channels in the memory chip; and when an access command for accessing the memory chip by the SoC is a write command, data may be simultaneously written into a plurality of channels in the memory chip, for example, a data block is distributed and stored in different channels. In this way, a speed of accessing a DDR can be improved, and the multi-channel access may be understood as channel interleaving.

As shown in FIG. 3, an SoC includes a central processing unit (Central Processing Unit, CPU), and further includes a DDR controller and PHYs corresponding to all channels. The DDR controller may include an interleaving logic circuit. The interleaving logic circuit may be configured to perform address decoding on an access command sent by the CPU, and a decoded address may be used for accessing a memory chip. Address decoding may be performed by a decoder in the DDR controller. A process in which the decoder is configured to decode an address may be understood as a process of performing address interleaving based on an access address of the access command, and determining a to-be-accessed channel, a BG, a bank, a row, a column, and the like in the to-be-accessed channel. The process of determining the to-be-accessed channel may be understood as the foregoing channel interleaving process.

Specifically, the access address of the access command sent by the CPU includes a plurality of bits, and each bit corresponds to one address line. The decoder may determine, based on bit values of the plurality of bits, a corresponding address line to output a chip select signal, and the chip select signal may be understood as a high-level signal or a low-level signal. The plurality of bits include bits for performing channel interleaving. For example, as shown in FIG. 3, the memory chip includes four channels: CH0, CH1, CH2, and CH3. When represented in a binary system, the four channels may be represented as 00, 01, 10, and 11, that is, two bits in the access address may indicate a channel to be accessed by the access command. If ADD(m) and ADD(n) represent two bits of the to-be-accessed channel, for example, bit values of ADD(m) and ADD(n) are 00, gating signals CH1_CS, CH2_CS, and CH3_CS are low-level signals, and when the gating signal CH0_CS is a high-level signal, a CH0 PHY drives the CH0 to be gated. A plurality of access commands may access a plurality of different channels, and a read operation or a write operation may be performed on the plurality of channels at the same time, so that a speed of accessing the memory chip is high.

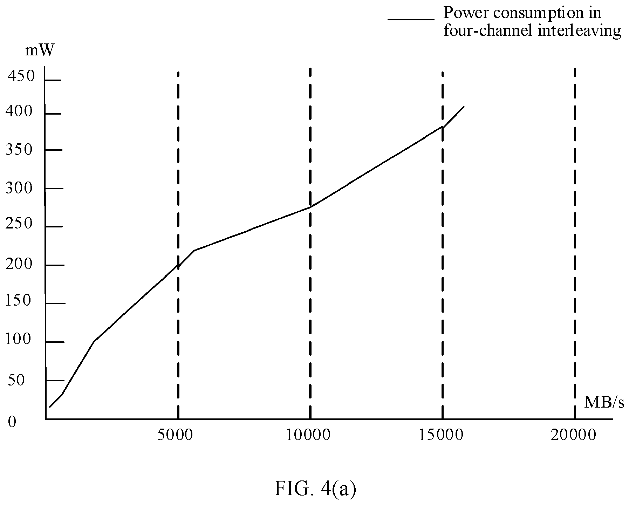

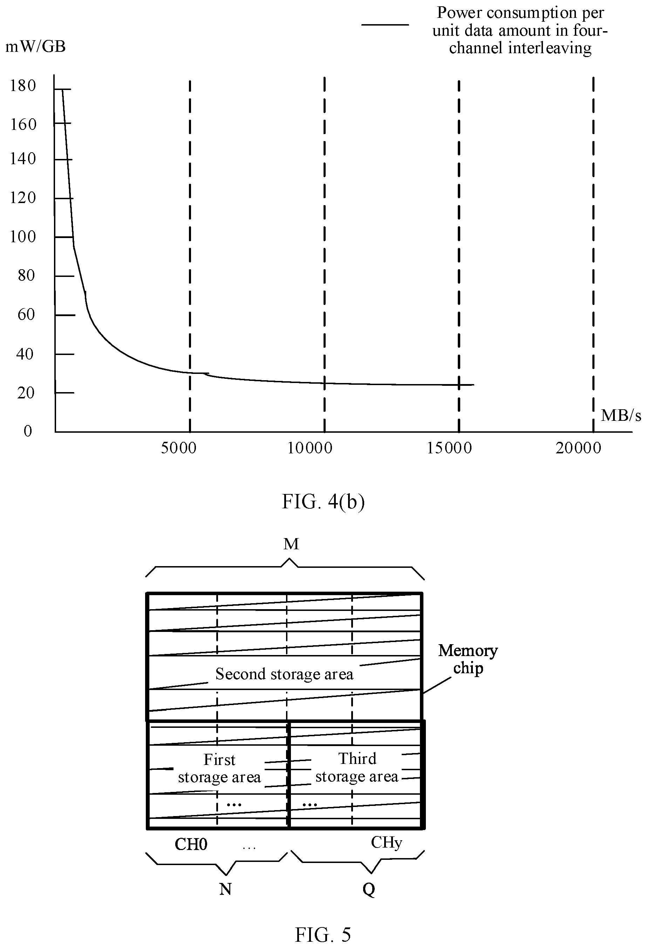

Generally, a maximum peak bandwidth provided by a two-channel LPDDR5 memory chip is less than a maximum peak bandwidth provided by a four-channel LPDDR5 memory chip. However, in most scenarios, a bandwidth required for accessing the memory chip is low, and the two-channel LPDDR5 can meet a bandwidth requirement of most scenarios. In only a few scenarios, the bandwidth required for accessing the memory chip is high. The four-channel LPDDR5 is required to support a high bandwidth. However, in order to meet the requirement of the high bandwidth in a few scenarios, the four-channel LPDDR5 is usually used for supporting a processor core in accessing a memory. As shown in FIG. 4(a) and FIG. 4(b), a large amount of test data shows that power consumption of a four-channel LPDDR5 is greater than that of a two-channel LPDDR5 at a same bandwidth. FIG. 4(a) is a schematic diagram of power consumption of a four-channel LPDDR5. A horizontal axis represents a bandwidth, that is, a quantity of bytes transmitted per second, and a unit is MB/s. A vertical axis represents power consumption of a four-channel LPDDR5 at different bandwidths, and a unit is mW. It can be learned that the power consumption of the LPDDR5 increases greatly with an increase of the bandwidth during access. FIG. 4(b) is a schematic diagram of power consumption per unit data amount of the four-channel LPDDR5 at different bandwidths. A horizontal axis represents a bandwidth, and a unit is MB/s. A vertical axis represents power consumption per unit data amount of the four-channel LPDDR5 at the different bandwidths, and a unit is mW/GB. It can be learned that, with an increase of the bandwidth, the power consumption of the unit data amount decreases. When the four-channel memory chip adopts a single channel interleaving mode, an operating bandwidth of the memory chip falls in a left area of FIG. 4(b). Energy efficiency of the LPDDR5 may be understood as an amount of data transmitted per unit power consumption of the memory chip. When the power consumption of the unit data amount is high, it may be understood as that the energy efficiency of the LPDDR5 is low, that is, the energy efficiency is poor. Therefore, this application provides a memory access apparatus, and the memory access apparatus may be used in a scenario of accessing a multi-channel memory chip. For example, the memory access apparatus is used in a scenario of accessing the four-channel LPDDR5.

To reduce power consumption of accessing a four-channel memory chip by a CPU and improve energy efficiency, when accessing the memory chip, the memory access apparatus provided in this application considers a storage area of the memory chip as a plurality of different storage areas. Different storage areas may occupy a same quantity of channels or may occupy different quantities of channels. In this application, there are at least two types of storage areas that occupy different quantities of channels. For example, as shown in FIG. 5, a memory chip includes M channels (CH0 to CHy), and a storage area in which the M channels are located includes three storage areas: a first storage area, a second storage area, and a third storage area. The first storage area occupies N channels, the second storage area occupies M channels (namely, all channels of the memory chip), and the third storage area occupies Q channels. Each of the first storage area, the second storage area, and the third storage area occupies a part of storage areas in all storage areas in which all channels are located. Details are shown in FIG. 5. M, N, and Q are positive integers greater than 1, y=M 1, M is greater than N, and M is greater than Q. It is clear that, this application is not limited to dividing the memory chip into only the three storage areas, and the memory chip may be further divided into less than three storage areas or more than three storage areas.

For a plurality of storage areas obtained through division in this application, different bandwidths are required for accessing different storage areas. In a high bandwidth scenario, a storage area corresponding to the high bandwidth scenario may be accessed, and the storage area corresponding to the high bandwidth scenario occupies a large quantity of channels. In a low bandwidth scenario, a storage area corresponding to the low bandwidth scenario may be accessed, and the storage area corresponding to the low bandwidth scenario occupies a small quantity of channels. A scenario of accessing the memory chip is mostly in the low bandwidth scenario. Therefore, in most low bandwidth scenarios, because the storage area occupies the small quantity of channels, only a few channels need to be accessed in most scenarios, that is, channel interleaving access is performed on a few channels. In this way, in comparison with channel interleaving performed on a plurality of channels in the high bandwidth scenario, the channel interleaving performed on the few channels has lower power consumption of the memory chip and higher energy efficiency.

For example, in the low bandwidth scenario, data stored in an accessed storage area (for example, the second storage area or the third storage area) that occupies a small quantity of channels may be, for example, service data of a static memory (for example, initialization data used when a CPU starts to run) or service data in a memory that is accessed at a low frequency (for example, data that is accessed once after startup and that is not accessed subsequently). In the high bandwidth scenario, data stored in an accessed storage area (for example, the first storage area) that occupies a large quantity of channels may be, for example, data that requires a high bandwidth, such as a game.

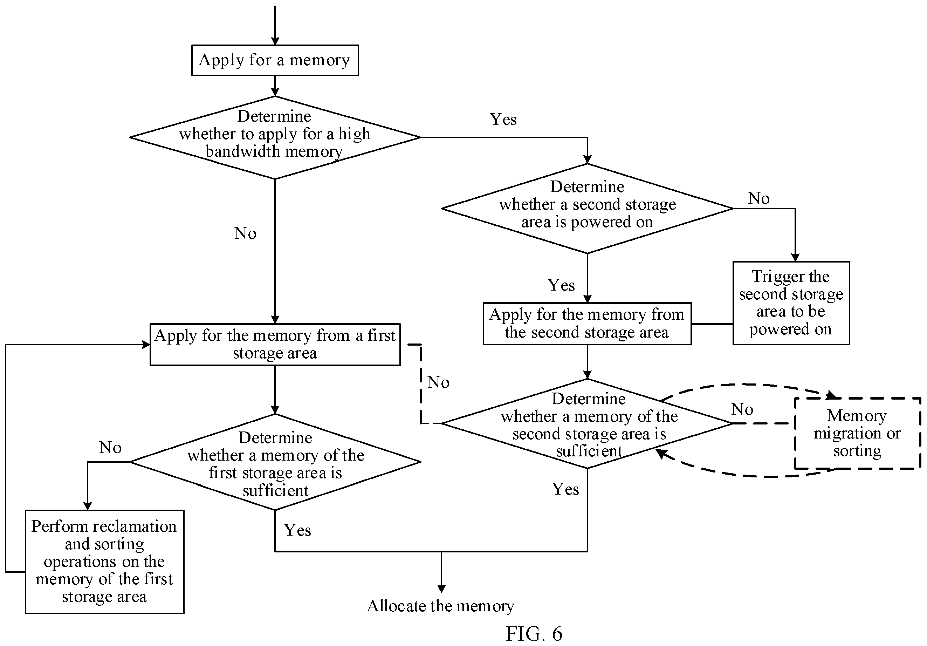

Before accessing the memory chip, the CPU needs to apply for a memory from a DDR controller first, to obtain an access address range of an area of the memory that is applied for, to send an access command to the memory chip based on the access address range. Considering that the memory chip is divided into the plurality of storage areas in this application, when allocating a memory, the DDR controller needs to determine, based on a service scenario, a storage area from which the memory is allocated. The following uses two memory areas as an example for description. In this application, a memory allocation procedure of software memory management is different from an existing memory allocation procedure. The memory allocation procedure in this application can meet a bandwidth requirement of a service with a high bandwidth requirement, and can also meet a user performance requirement and an energy efficiency requirement of a service with a low bandwidth requirement. For example, as shown in FIG. 6, a memory allocation procedure in this application may be as follows. (1) A CPU applies for a memory from a DDR controller.

(2) The DDR controller determines whether a high bandwidth memory needs to be applied for. If determining that the high bandwidth memory needs to be applied for, the DDR controller determines whether a second storage area is powered on, and then performs step (3). If determining that the high bandwidth memory does not need to be applied for, the DDR controller applies for the memory from a first storage area, and then performs step (4). The DDR controller may determine, based on a service type requested by the CPU, whether to allocate a memory in the first storage area or in the second storage area. If a bandwidth required by the service type is high, the DDR controller determines to allocate the memory in the second storage area; or if a bandwidth required by the service type is low, the DDR controller determines to allocate a memory in the first storage area.

Because an access frequency of the second storage area is lower than an access frequency of the first storage area, to reduce power consumption of a memory chip, the second storage area may be controlled to be powered off when no memory is applied for from the second storage area. Therefore, step (3) may be as follows: (3) When determining that the second storage area is not powered on, the DDR controller first triggers the second storage area to be powered on, and then applies for the memory from the second storage area. When determining that the memory needs to be allocated, the DDR controller first determines whether the memory of the second storage area is sufficient. If determining that the memory of the second storage area is insufficient, the DDR controller may first perform memory migration or sorting on the second storage area, and then allocate the memory from the second storage area. Alternatively, if it is determined that the memory of the second storage area is insufficient, the memory may be applied for from the first storage area.

(4) When determining to apply for the memory from the first storage area, the DDR controller first determines whether the memory of the first storage area is sufficient, and if it is determined that the memory is sufficient, the DDR controller allocates the memory from the first storage area; or if it is determined that the memory is insufficient, the DDR controller may first perform reclamation and sorting operations on the memory of the first storage area, and then apply for the memory from the first storage area.

In the foregoing memory allocation procedure, when the DDR controller allocates the memory, if the memory chip in this application includes the first storage area and the second storage area shown in FIG. 5, when the DDR controller allocates the memory based on the service type, if the service type of a first access command is a service that requires a high bandwidth, such as gaming, the DDR controller may allocate the memory from the second storage area; if the service type of the first access command is a service that requires a static memory, the DDR controller may allocate the memory from the first storage area; or when the service type of the first access command is a service that requires an extremely low bandwidth, the DDR controller may allocate the memory from the first storage area.

If the memory chip in this application includes the first storage area, the second storage area, and the third storage area shown in FIG. 5, the second storage area is allocated to a service scenario that requires the high bandwidth, such as gaming, the first storage area may be allocated to a service scenario that requires the static memory or a non-service scenario that requires the extremely low bandwidth, and the third storage area may be allocated to another common service scenario other than the service scenario of the first storage area and the service scenario of the second storage area.

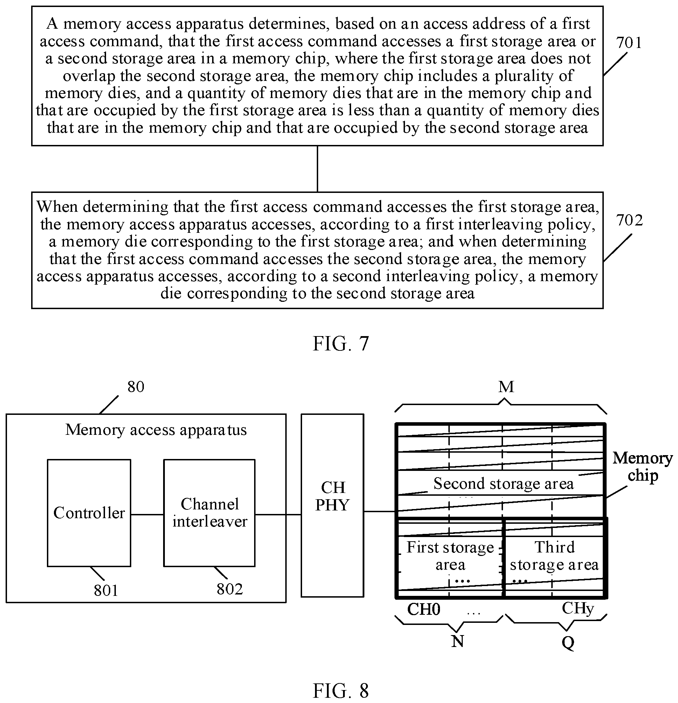

After obtaining the memory through application, that is, obtaining an access address range corresponding to the storage area, the CPU may further send an access command to the DDR controller based on the access address range, where the access command carries a specific access address, so that the DDR controller performs channel interleaving access. An embodiment of this application provides a method for accessing a memory. As shown in FIG. 7, the method may be applied to the system framework shown in FIG. 3. When a CPU accesses a memory chip, an address of an access command sent by the CPU is decoded through an interleaving logic circuit in a DDR controller, and a decoded address is sent to the memory chip through a CH PHY for channel access. It may be understood that the CPU shown in FIG. 3 in this application may also be replaced with another processor or component configured to access the memory chip. The processor is not limited to the CPU in this application.

The method in this application may be applied to a memory access apparatus obtained by improving the interleaving logic circuit in the DDR controller shown in FIG. 3. FIG. 8 shows a memory access apparatus 80. The memory access apparatus 80 includes a controller 801 and a channel interleaver 802, and the DDR controller includes the memory access apparatus 80. Based on this, the method includes the following steps. 701: The memory access apparatus determines, based on an access address of a first access command, that the first access command accesses a first storage area or a second storage area in a memory chip, where the first storage area does not overlap the second storage area, the memory chip includes a plurality of memory dies, the first storage area occupies a first quantity of memory dies in the memory chip, the second storage area occupies a second quantity of memory dies in the memory chip, and the first quantity is less than the second quantity. Step 701 may be performed by the foregoing controller 801.

In some embodiments, the memory chip includes the plurality of memory dies. This means that the memory chip includes a plurality of channels, and each memory die provides one channel. The quantity of memory dies occupied by the first storage area is less than the quantity of memory dies occupied by the second storage area. In this way, when accessing the second storage area, the memory access apparatus 80 may perform channel interleaving on a large quantity of memory dies, and when accessing the first storage area, may perform channel interleaving on a small quantity of memory dies. It may be understood that a bandwidth used when the memory access apparatus 80 accesses the second storage area is high, and in comparison, a bandwidth used when the memory access apparatus 80 accesses the first storage area is low.

For example, the first storage area corresponds to a first address range, and the second storage area corresponds to a second address range. When the access address of the first access command belongs to the first address range, the controller 801 determines that the first access command accesses the first storage area; or when the access address of the first access command belongs to the second address range, the controller 801 determines that the first access command accesses the second storage area. It is assumed that the first access command is for accessing first data in the first storage area, and a second access command is for accessing second data in the second storage area. Because the second storage area occupies a large quantity of memory dies, and the first storage area occupies a small quantity of memory dies, it may be understood that a second bandwidth required for accessing the second data in the second storage area is higher than a first bandwidth required for accessing the first data in the first storage area. When the second storage area is accessed, power consumption of the memory chip is high. When the first storage area is accessed, power consumption of the memory chip is low, and energy efficiency is high.

702: When determining that the first access command accesses the first storage area, the memory access apparatus switches on the first quantity of memory dies; and when determining that the first access command accesses the second storage area, the memory access apparatus switches on the second quantity of memory dies. Switching on one or more dies is: enabling the one or more dies, so that an access device can access the one or more dies, and the access includes at least one of reading or writing. Step 702 may be performed by the channel interleaver 802. It may be understood that, when the first access command accesses the first storage area, the CPU may perform channel interleaving access on the first quantity of memory dies in the memory chip; or when the first access command accesses the second storage area, the CPU may perform channel interleaving access on the second quantity of memory dies in the memory chip. Therefore, when the channel interleaver 80 switches on the first quantity of memory dies, the first quantity of memory dies may be accessed at an address obtained by decoding the access address of the first access command; or when the channel interleaver 80 switches on a gating signal corresponding to the second quantity of memory dies, the second quantity of memory dies may be accessed at an address obtained by decoding the access address of the first access command.

For example, as shown in FIG. 5, it is assumed that the memory chip includes y+1 channels (CH0, ..., CHy), where y is a positive integer. When the channel interleaver 802 is configured to switch on N memory dies occupied by the first storage area, the CPU may perform interleaving access on the N memory dies; or when the channel interleaver 802 is configured to switch on M memory dies occupied by the second storage area are switch-on, the CPU may perform interleaving access on the M memory dies. M and N are positive integers greater than 1, and M is greater than N. In some embodiments, the second quantity of memory dies include the first quantity of memory dies. To be specific, only the first quantity of memory dies in the second quantity of memory dies are used for interleaving access.

Based on the example in FIG. 3, in a current technology, whether a chip select signal of four memory dies is a high-level signal or a low-level signal is determined based on two bits in an access address. With reference to division of storage areas of a memory chip in this application, in embodiments of this application, when it is determined, based on address ranges, that storage areas accessed by different access commands may be different, that is, when memory dies that perform channel interleaving may be different, a gating signal of a first quantity of memory dies for accessing a first storage area is different from a gating signal of a second quantity of memory dies for accessing a second storage area. The first access command in this application includes a plurality of bits, the plurality of bits indicate an access address of the first access command, and each bit of the plurality of bits corresponds to an address line of the access address. Based on this, in some embodiments, the channel interleaver 802 may be configured to: when the first access command accesses the first storage area, control the gating signal of the first quantity of memory dies to be switch-on. When the gating signal of the first quantity of memory dies is switch-on, the first quantity of memory dies may be accessed. Therefore, the channel interleaver 802 may be further configured to output the gating signal based on a bit for indicating a memory die in the plurality of bits included in the first access command, where the gating signal is for gating one memory die in the first quantity of memory dies; and when the second access command accesses the second storage area, the channel interleaver 802 controls the gating signal of the second quantity of memory dies to be switch-on. When the gating signal of the second quantity of memory dies is switch-on, the second quantity of memory dies may be accessed. Therefore, the channel interleaver 802 may be further configured to output the gating signal based on the bit for indicating the memory die in the plurality of bits included in the first access command, where the gating signal is for gating one memory die in the second quantity of memory dies.

In this way, in a case of storage area division in this application, when different storage areas are accessed, quantities of gated memory dies are different, in other words, quantities of memory dies participating in channel interleaving are different. When only the first quantity of memory dies are switch-on to perform channel interleaving, the memory dies that are activated for access and that are in the memory chip are only a part of memory dies in the memory chip. In this case, power consumption of the memory chip is low, and energy efficiency is high.

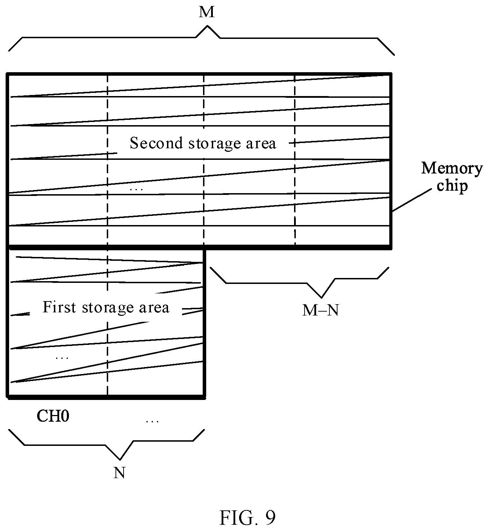

In some embodiments, each memory die in the second quantity of memory dies has a same memory capacity. In another embodiment, it is assumed that the memory chip in this application includes the first storage area and the second storage area in FIG. 5. This application may further provide a specific memory chip. As shown in FIG. 9, a second quantity (M shown in FIG. 9) of memory dies further includes a third quantity (M-N shown in FIG. 9) of memory dies other than a first quantity (N shown in FIG. 9) of memory dies; and a memory capacity of each memory die in the first quantity of memory dies is greater than a memory capacity of each memory die in the third quantity of memory dies. In this way, a storage area of the memory chip has only two areas: the first storage area and the second storage area. When memory allocation is performed, access needs to be performed based on only address ranges of the two areas, and implementation of the memory allocation is simple.

The following describes a further implementation of the memory access apparatus 80 in this application. An example in which the memory chip includes four memory dies, the storage area of the memory chip includes the first storage area and the second storage area shown in FIG. 5 or FIG. 9, the first storage area occupies two memory dies, and the second storage area occupies four memory dies is used for description. In addition, the following uses an example in which the memory die is a channel for description.

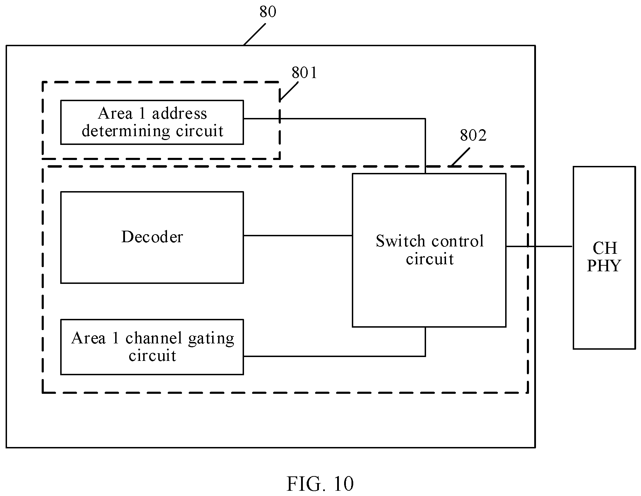

FIG. 10 shows an implementation of a memory access apparatus 80. The controller 801 includes an area 1 address determining circuit. A channel interleaver 802 includes a decoder, an area 1 channel gating circuit, and a switch control circuit. The area 1 address determining circuit is configured to: determine whether an access address in a first access command meets an address range corresponding to a first storage area; and if determining that the access address meets the address range corresponding to the first storage area, send a first signal to the switch control circuit, where the first signal indicates the switch control circuit to control a gating signal of a channel corresponding to the first storage area to be switch-on. Because the first storage area occupies two channels of four channels, when controlling an address line to be switch-on, the switch control circuit switches on two gating signals corresponding to the two channels. The area 1 channel gating circuit is configured to: determine, based on a bit for indicating a gated channel in the access address, whether either of the two gating signals corresponding to the two channels occupied by the first storage area outputs a high level or a low level, so that a CPU accesses a channel corresponding to a gating signal that outputs the high level.

When the area 1 address determining circuit determines that the access address of the first access command does not meet the address range of the first storage area, the switch control circuit is configured to control the decoder to switch on four gating signals connected to the four channels. In this case, the decoder is configured to: when a gated channel is determined based on two bits that are in the access address and that indicate the channel, control a gating signal corresponding to the gated channel in the four gating signals to output the high level; and control gating signals of the remaining three channels that are not gated to output the low level.

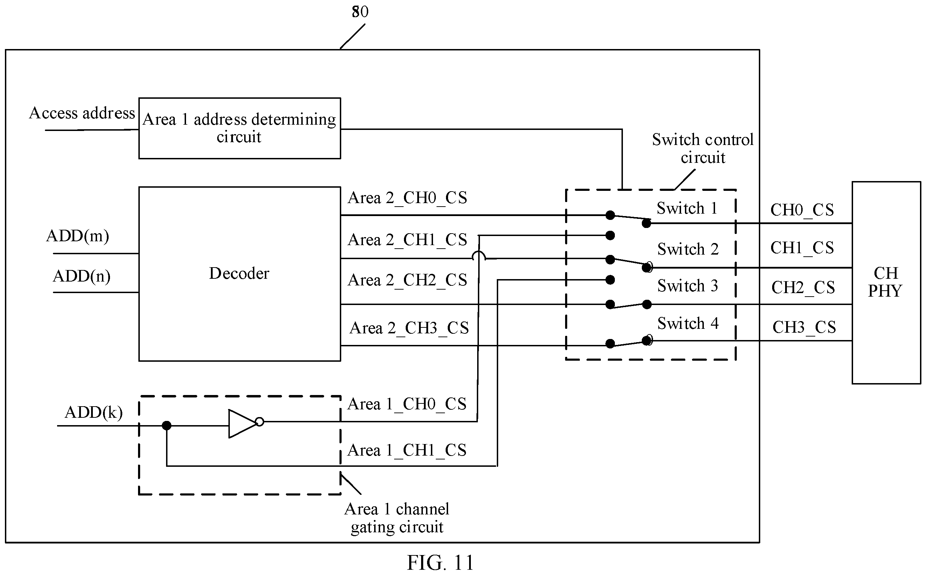

In some embodiments, a specific implementation of the memory access apparatus 80 shown in FIG. 10 may be shown in FIG. 11. Refer to FIG. 11. It is assumed that a plurality of bits of a first access command include ADD(m), ADD(n), and ADD(k), where ADD(m) and ADD(n) are two bits for determining an accessed channel in four channels (CH0, CH1, CH2, and CH3) occupied by a second storage area, and ADD(k) is a bit for determining a gated channel in two channels (CH0 and CH1) occupied by a first storage area. Gating signals of the four channels corresponding to the second storage area include area 2_CH0_CS, area 2_CH1_CS, area 2_CH2_CS, and area 2_CH3_CS. Gating signals of the two channels corresponding to the first storage area include area 1_CH0_CS and area 1_CH1_CS. An area 1 channel gating circuit includes a reverser. A switch control circuit includes a switch 1, a switch 2, a switch 3, and a switch 4. The switch 1 and the switch 2 are single-pole double-throw switches, and the switch 3 and the switch 4 are single-pole single-throw switches.

When the area 1 address determining circuit determines that an access address of the first access command does not meet an address range of the first storage area, the area 1 determining circuit does not output a first signal to the switch control circuit. The switch control circuit may control the switch 1, the switch 2, the switch 3, and the switch 4 to be switch-on to a line of a decoder. In this case, all the four channels can be accessed, that is, four-channel interleaving access can be performed. For example, it is assumed that address information of two bits ADD(m) and ADD(n) is 00. The decoder determines that the first access command accesses CH0 in the four channels, the decoder controls the gating signal area 2_CH0_CS to be high-level, and the gating signal area 2_CH1_CS, the gating signal area 2_CH2_CS, and the gating signal area 2_CH3_CS to be low-level. Similarly, it is assumed that address information of two bits ADD(m) and ADD(n) is 01. The decoder determines that the first access command accesses the CH1 in the four channels, and the decoder controls the gating signal area 2_CH1_CS to be high-level, and controls the gating signal area 2_CH0_CS, the gating signal area 2_CH2_CS, and the gating signal area 2_CH3_CS to be low-level.

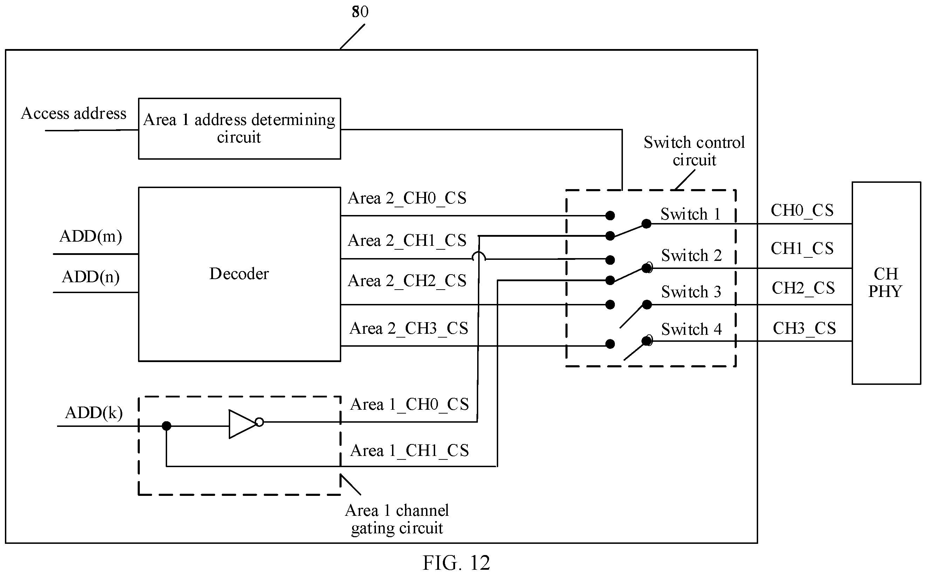

The memory access apparatus 80 shown in FIG. 10 may be further changed to a memory access apparatus shown in FIG. 12. When an area 1 address determining circuit determines that an access address of a first access command meets an address range of a first storage area, the area 1 determining circuit outputs a first signal to a switch control circuit. The switch control circuit may control a switch 1 and a switch 2 to be switch-on to an area 1 gating circuit, and a switch 3 and a switch 4 to be disconnected. In this case, only gating signals of two channels CH0 and CH1 are switch-on, that is, two-channel interleaving access can be performed. For example, it is assumed that the first access command accesses CH0, and address information of ADD(k) is 0. Because of a function of a reverser, a gating signal area 1_CH0_CS is high-level, and a gating signal area 1_CH1_CS is low-level. It is assumed that the first access command accesses CH1, and address information of ADD(k) is 1. Because of a function of a reverser, a gating signal area 1_CH0_CS is low-level, and a gating signal area 1_CH1_CS is high-level. In this way, through accessing different storage areas and switching on different gating signals of indication channels, when switching on gating signals of a few channels, a channel interleaver 802 may perform channel interleaving on some channels, that is, only some channels in a memory chip are accessed, so that power consumption of the memory chip is reduced and energy efficiency is improved.

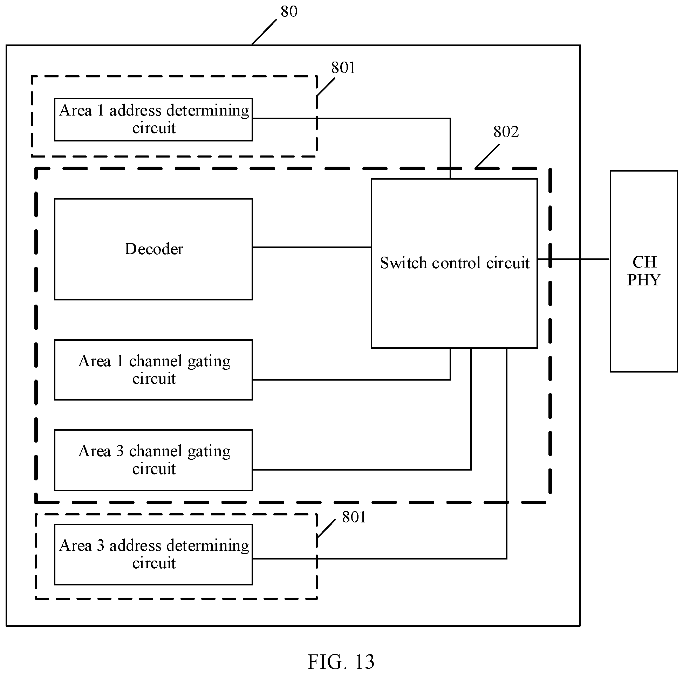

Based on the memory access apparatus 80 shown in FIG. 10, it is assumed that a storage area of a memory chip is divided into the first storage area, the second storage area, and the third storage area shown in FIG. 5, and the third storage area occupies two channels that are not occupied by the first storage area in four channels. In this case, the memory access apparatus 80 in FIG. 10 may be replaced with a memory access apparatus 80 shown in FIG. 13. Based on the circuit structure including the memory access apparatus 80 shown in FIG. 10, a controller 801 and a channel interleaver 802 shown in FIG. 13 further include: an area 3 address determining circuit, configured to: determine whether an access address in a first access command meets an address range corresponding to a third storage area, and if determining that the access address meets the address range corresponding to the third storage area, send a third signal to a switch control circuit, where the third signal indicates the switch control circuit to control a gating signal of a channel corresponding to the third storage area to be switch-on; and an area 3 channel gating circuit, configured to: determine, based on a bit for indicating a gated channel in the access address, whether either of the two gating signals corresponding to the two channels occupied by the third storage area outputs a high level or a low level, to access a channel corresponding to the gating signal that outputs the high level.

When an area 1 address determining circuit determines that the access address of the first access command is in an address range of the first storage area, the switch control circuit is configured to control a decoder to switch on four gating signals connected to the four channels. In this case, the decoder is configured to: when a gated channel is determined based on two bits that are in the access address and that indicate a channel, control a gating signal corresponding to the accessed channel in the four gating signals to output the high level; and control gating signals of the remaining three channels that are not gated to output the low level.

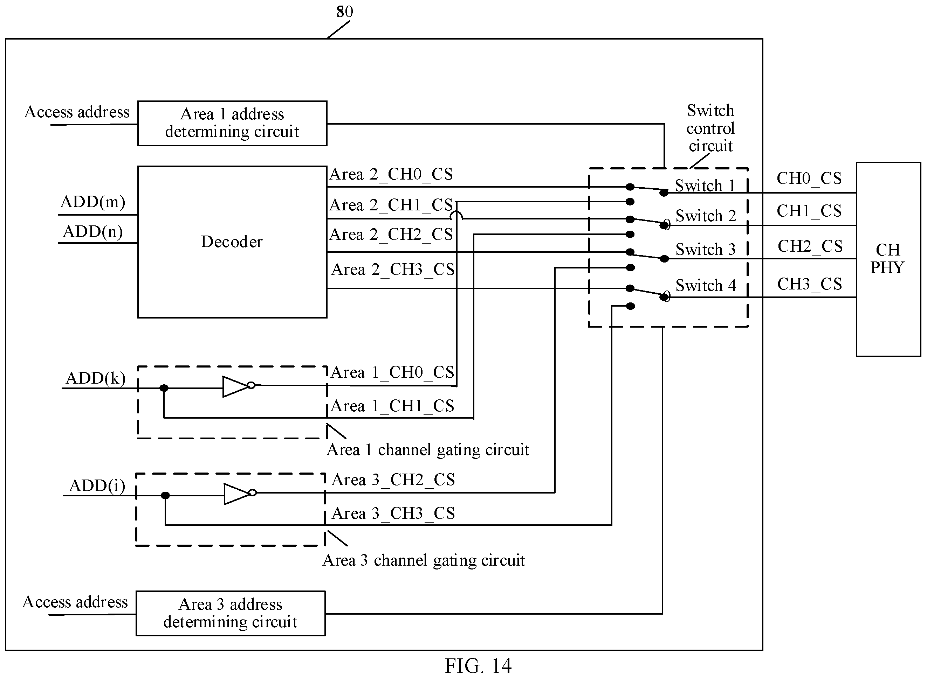

In some embodiments, a specific implementation of a memory access apparatus 50 in FIG. 13 may be shown in FIG. 14. Refer to FIG. 14. It is assumed that a plurality of bits of a first access command include ADD(m), ADD(n), ADD(k), and ADD(i), where ADD(m) and ADD(n) are two bits for determining a gated channel in four channels (CH0, CH1, CH2, and CH3) occupied by a second storage area, ADD(k) is a bit for determining a gated channel in two channels (CH0 and CH1) occupied by a first storage area, and ADD(i) is a bit for determining a gated channel in two channels (CH2 and CH3) occupied by a third storage area. Gating signals of the four channels corresponding to the second storage area include area 2_CH0_CS, area 2_CH1_CS, area 2_CH2_CS, and area 2_CH3_CS. Gating signals of the two channels corresponding to the first storage area include area 1_CH0_CS and area 1_CH1_CS, and an area 1 channel gating circuit includes a reverser. Gating signals of the two channels corresponding to a third storage area include an area 3_CH2_CS and an area 3_CH3_CS, and an area 3 channel gating circuit includes a reverser. A switch control circuit includes a switch 1, a switch 2, a switch 3, and a switch 4. The switch 1, the switch 2, the switch 3, and the switch 4 are all single-pole double-throw switches. Then,
when an area 1 address determining circuit determines that an access address of the first access command does not meet an address range of the first storage area, the area 1 determining circuit does not output a first signal to the switch control circuit. When an area 3 address determining circuit also determines that the access address of the first access command does not meet an address range of the third storage area, the area 3 determining circuit does not output a third signal to the switch control circuit. In this case, the switch control circuit may control the switch 1, the switch 2, the switch 3, and the switch 4 to be switch-on to a line of a decoder. In this case, all the four channels can be accessed, that is, four-channel interleaving access can be performed. A switch connection manner of the memory access apparatus 80 may be shown in FIG. 14. Implementation principles of the gating signals area 2_CH0_CS, area 2_CH1_CS, area 2_CH2_CS, and area 2_CH3_CS are similar to those described in FIG. 11.

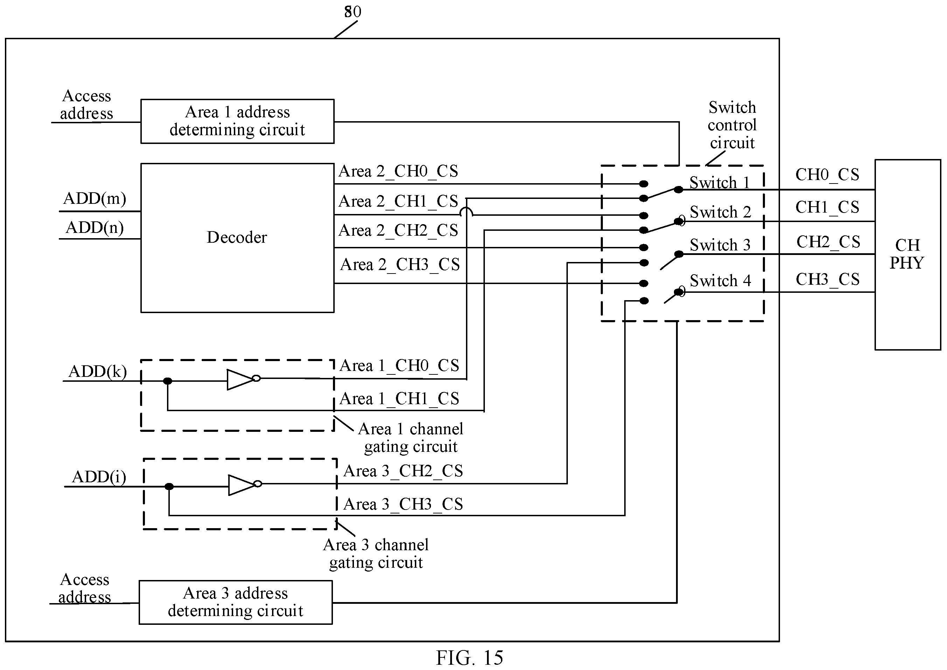

The memory access apparatus 80 shown in FIG. 13 may be further changed to a memory access apparatus shown in FIG. 15. When an area 1 address determining circuit determines that an access address of a first access command meets an address range of a first storage area, the area 1 determining circuit outputs a first signal to a switch control circuit. The switch control circuit may control a switch 1 and a switch 2 to be switch-on to an area 1 channel gating circuit, and control a switch 3 and a switch 4 to be disconnected from an area 3 channel gating circuit. Implementation principles of the gating signals area 1_CH0_CS and area 1_CH1_CS are similar to those described in FIG. 12.

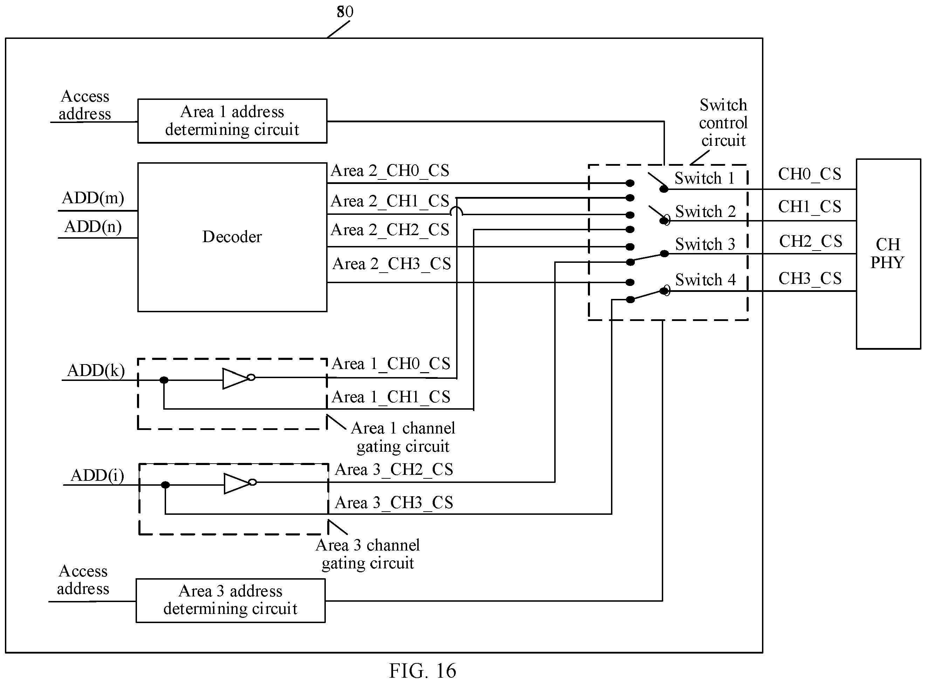

The memory access apparatus 80 shown in FIG. 13 may be further changed to a memory access apparatus shown in FIG. 16. When an area 3 address determining circuit determines that an access address of a first access command meets an address range of a third storage area, the area 3 determining circuit outputs a third signal to a switch control circuit. The switch control circuit may control a switch 1 to be disconnected, a switch 2 to be disconnected, and the switch 3 and the switch 4 to be switch-on to an area 3 channel gating circuit. In this case, only gating signals of two channels CH2 and CH3 are switch-on, and two-channel interleaving access can be performed. For example, it is assumed that the first access command accesses CH2, and address information of ADD(i) is 0. Because of a function of a reverser in the area 3 channel gating circuit, a gating signal area 3_CH2_CS is high-level, and a gating signal area 3_CH3_CS is low-level. It is assumed that the first access command accesses CH3, and address information of ADD(i) is 1. Because of a function of a reverser, a gating signal area 3_CH2_CS is low-level, and a gating signal area 3_CH3_CS is high-level.

It may be understood that, in this application, a memory chip may be further divided into more than three storage areas. Correspondingly, an address determining circuit and a channel gating circuit may be correspondingly added based on FIG. 13, to access some channels of the memory chip, reduce power consumption of the memory chip, and improve energy efficiency of the memory chip.

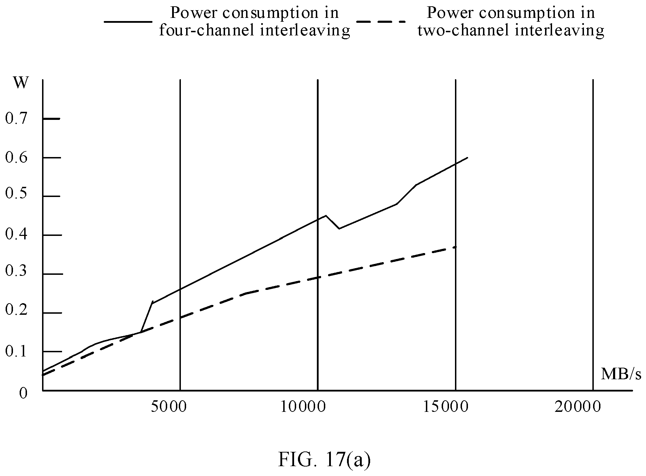

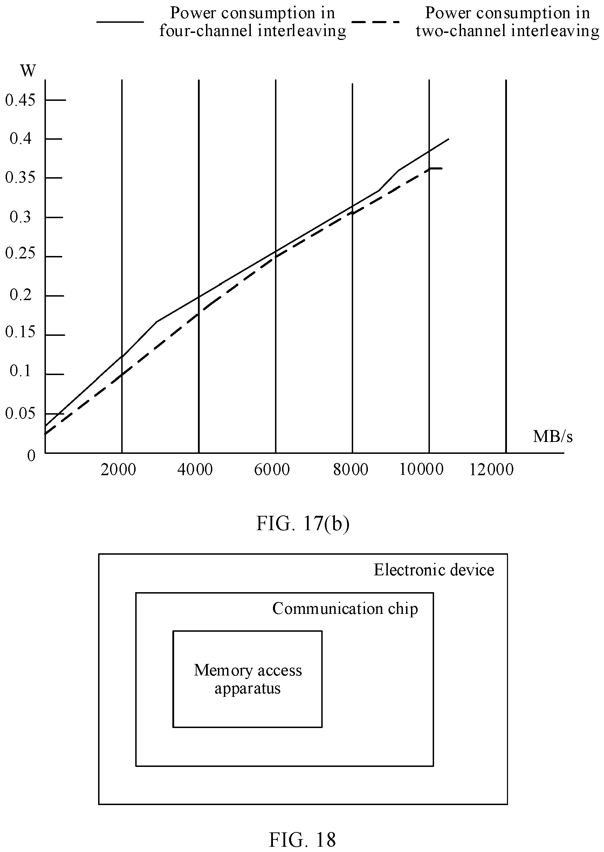

This application further tests power consumption of a four-channel memory chip simulated by using a same software version on different platforms to perform two-channel interleaving access and four-channel interleaving access. For a test result, refer to FIG. 17(a) and FIG. 17(b). FIG. 17(a) shows a test result on a platform. A horizontal axis represents a quantity of bytes transmitted per second, and is denoted in MB/s. A vertical axis represents power consumption, and is denoted in W. It can be learned that, when the four-channel memory chip performs two-channel interleaving and four-channel interleaving, under a same bandwidth (a same quantity of bytes transmitted per second), power consumption of the memory chip in the two-channel interleaving is less than power consumption of the memory chip in the four-channel interleaving. FIG. 17(b) shows a test result on another platform, and a horizontal axis and a vertical axis represent the same meaning as those in FIG. 17(a). It can be learned that, when a four-channel memory chip performs two-channel interleaving and four-channel interleaving, a same test result is obtained under a same bandwidth (a same quantity of bytes transmitted per second). In other words, power consumption of the memory chip in the two-channel interleaving is less than power consumption of the memory chip in the four-channel interleaving.

An embodiment of this application further provides a communication chip. The communication chip includes a memory access apparatus described in embodiments of this application. For example, the communication chip may be a chip such as an SoC or a GPU. An embodiment of this application further provides an electronic device. As shown in FIG. 18, the electronic device includes the communication chip described in embodiments of this application. The communication chip includes the memory access apparatus 80 provided in this application. An embodiment of this application further provides a computer-readable storage medium, including computer instructions. When the computer instructions are run on an electronic device, the electronic device is enabled to perform the method in the foregoing methods for accessing a memory. An embodiment of this application further provides a computer program product. When the computer program product runs on a computer, an electronic device is enabled to perform the method in the foregoing methods for accessing a memory.

Based on the foregoing descriptions of the implementations, a person skilled in the art may understand that for the purpose of convenient and brief description, division into the foregoing functional modules is merely used as an example for illustration. During actual application, the foregoing functions can be allocated to the different functional modules for implementation based on a requirement. In other words, an inner structure of an apparatus is divided into the different functional modules to implement all or a part of the functions described above.

In the several embodiments provided in this application, it should be understood that the disclosed apparatus and method may be implemented in other manners. For example, the described apparatus embodiment is merely illustrative. For example, division into the modules or the units is merely logical function division and may be other division in actual implementation. For example, a plurality of units or components may be combined or integrated into another apparatus, or some features may be ignored or not performed. In addition, the displayed or discussed mutual coupling or direct coupling or communication connection may be an indirect coupling or communication connection through some interfaces, apparatuses, or units, and may be in an electrical form, a mechanical form, or another form.

In addition, functional units in embodiments of this application may be integrated into one processing unit, each of the units may exist independently physically, or two or more units may be integrated into one unit. The foregoing integrated unit may be implemented in a form of hardware, or may be implemented in a form of a software functional unit. Although the foregoing embodiments are described by using a hardware circuit as an example, the foregoing embodiments are not limited thereto.

When the integrated unit is implemented in the form of the software functional unit and sold or used as an independent product, the integrated unit may be stored in a readable storage medium. Based on such an understanding, the technical solutions of embodiments of this application essentially, or the part contributing to the current technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, for example, a USB flash drive, a removable hard disk, a read only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A memory access apparatus, wherein the memory access apparatus comprises:
a controller, configured to: determine, based on an access address of a first access command, that the first access command accesses a first storage area or a second storage area in a memory chip, wherein the first storage area does not overlap the second storage area, the memory chip comprises a plurality of memory dies, the first storage area occupies a first quantity of memory dies in the memory chip, the second storage area occupies a second quantity of memory dies in the memory chip, and the first quantity is less than the second quantity; and
a channel interleaver, configured to: when the controller determines that the first access command accesses the first storage area, switch on the first quantity of memory dies; and when the controller determines that the first access command accesses the second storage area, switch on the second quantity of memory dies.

2. The memory access apparatus according to claim 1, wherein a second bandwidth required for accessing second data in the second storage area is higher than a first bandwidth required for accessing first data in the first storage area.

3. The memory access apparatus according to claim 1 or 2, wherein
the channel interleaver is specifically configured to: when the controller determines that the first access command accesses the first storage area, control a gating signal of the first quantity of memory dies to be switch-on; and
the channel interleaver is further configured to output the gating signal based on a bit for indicating a memory die in a plurality of bits comprised in the first access command, wherein the gating signal is for gating one memory die in the first quantity of memory dies.

4. The memory access apparatus according to claim 1 or 2, wherein
the channel interleaver is specifically config ured to: when the controller determines that the first access command accesses the second storage area, control a gating signal of the second quantity of memory dies to be switch-on; and
the channel interleaver is further configured to output the gating signal based on a bit for indicating a memory die in a plurality of bits comprised in the first access command, wherein the gating signal is for gating one memory die in the second quantity of memory dies.

5. The memory access apparatus according to any one of claims 1 to 4, wherein
memory capacities of all memory dies in the second quantity of memory dies are the same.

6. The memory access apparatus according to any one of claims 1 to 5, wherein
the second quantity of memory dies comprise the first quantity of memory dies.

7. The memory access apparatus according to claim 6, wherein the second quantity of memory dies further comprise a third quantity of memory dies other than the first quantity of memory dies; and
a memory capacity of each memory die in the first quantity of memory dies is greater than a memory capacity of each memory die in the third quantity of memory dies.

8. A method for accessing a memory, wherein the method comprises:
determining, by a memory access apparatus based on an access address of a first access command, that the first access command accesses a first storage area or a second storage area in a memory chip, wherein the first storage area does not overlap the second storage area, the memory chip comprises a plurality of memory dies, the first storage area occupies a first quantity of memory dies in the memory chip, the second storage area occupies a second quantity of memory dies in the memory chip, and the first quantity is less than the second quantity; and
switching on, by the memory access apparatus, the first quantity of memory dies when determining that the first access command accesses the first storage area; and switching on the second quantity of memory dies when determining that the first access command accesses the second storage area.

9. The method according to claim 8, wherein the method further comprises:
a second bandwidth required for accessing second data in the second storage area is higher than a first bandwidth required for accessing first data in the first storage area.

10. The method according to claim 8 or 9, wherein the switching on the first quantity of memory dies comprises: controlling a gating signal of the first quantity of memory dies to be switch-on; and
the method further comprises: gating one memory die in the first quantity of memory dies based on a bit for indicating a memory die in a plurality of bits comprised in the first access command.

11. The method according to claim 8 or 9, wherein the switching on the second quantity of memory dies comprises: controlling a gating signal of the second quantity of memory dies to be switch-on; and
the method further comprises: gating one memory die in the second quantity of memory dies based on a bit for indicating a memory die in a plurality of bits comprised in the first access command.

12. The method according to any one of claims 8 to 11, wherein
memory capacities of all memory dies in the second quantity of memory dies are the same.

13. The method according to any one of claims 8 to 12, wherein
the second quantity of memory dies comprise the first quantity of memory dies.

14. The method according to claim 13, wherein the second quantity of memory dies further comprise a third quantity of memory dies other than the first quantity of memory dies; and
a memory capacity of each memory die in the first quantity of memory dies is greater than a memory capacity of each memory die in the third quantity of memory dies.

15. A communication chip, wherein the communication chip comprises the memory access apparatus according to any one of claims 1 to 7.

16. An electronic device, wherein the electronic device comprises the memory access apparatus according to any one of claims 1 to 7.
